(19) Europäisches Patentamt / European Patent Office / Office européen des brevets

(11) **EP 3 862 741 A1**

(12) **EUROPEAN PATENT APPLICATION**
published in accordance with Art. 153(4) EPC

(43) Date of publication:
**11.08.2021  Bulletin 2021/32**

(21) Application number: **19868651.1**

(22) Date of filing: **01.10.2019**

(51) Int Cl.:
*G01N 11/08* *(2006.01)*

(86) International application number:
**PCT/ES2019/070653**

(87) International publication number:
**WO 2020/070359 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **02.10.2018  ES 201830949**

(71) Applicant: **Universidad de Huelva**
**21071 Huelva (ES)**

(72) Inventors:
• **MARTIN ALFONSO, María José**
  **21071 Huelva (ES)**
• **MARTINEZ BOZA, Francisco José**
  **21071 Huelva (ES)**
• **PARTAL LOPEZ, Pedro**
  **21071 Huelva (ES)**
• **NAVARRO DOMINGUEZ, Francisco Javier**
  **21071 Huelva (ES)**

(74) Representative: **Temiño Ceniceros, Ignacio**
**Calle Amador de los Rios 1-1°**
**28010 Madrid (ES)**

(54) **DEVICE FOR MEASURING RHEOLOGICAL PROPERTIES IN FLUIDS**

(57)     The present invention relates to an equipment for measuring the rheological properties in fluids, which enables capillary flow to be studied and the rheological properties of all types of fluids such as dispersions, organic and inorganic fluids to be determined, in a pressure range comprised between 0-4000 bar and a temperature range from -180 °C to 800 °C; wherein the fluid to be analysed is passed through a capillary with a circular cross section; which has the particular feature of having an independent circuit for loading the fluid to be analysed in the capillary that is thermally protected by means of a thermostatic chamber, and an independent circuit of pressurisation fluid, all this being automatically controlled by means of a computer that manages all the regulation actions and receives the data of the pressure variations of the fluid as it passes through the capillary with which it calculates the rheological values of the fluid.

FIG.1

## Description

### Field of the invention

The present invention relates to a device for measuring rheological properties such as viscosity and threshold stress, of all types of fluids by means of controlling the flow conditions through a conduit at selected pressure and temperature.

The invention falls within the equipment and devices with which capillary flow in compressed fluids can be studied.

### State of the art

It is known that the measurement of rheological properties at pressures different from the atmosphere is achieved by using various devices and apparatuses such as viscometers and rheometers. In this sense, falling body viscometers enable flow properties to be measured under pressure conditions, measuring the terminal velocity of an object falling within a pressurised fluid, driven by a force such as gravitational force.

Furthermore, rotational viscometers and rheometers subject a fluid to a shearing velocity between two surfaces. These devices consist of one or more motors and magnetic couplings capable of controlling the torque or the rotational velocity and a geometry that contains the sample and creates a known shear field in a pressurised vessel. To carry out the measurement, the motor applies a torque or a rotation velocity on the movable portion of the geometry, which is transmitted to the vessel by means of the coupling and the damping of the movement or reaction torque is quantified as a consequence of the presence of the fluid in the geometry.

In the case of the present specification, the equipment is based on a device that is comprised within capillary devices, and as a general rule these devices consist of a system that drives a fluid forcing it to pass through a conduit or capillary of known geometry. Determining rheological properties such as viscosity or threshold stress is possible in two ways:

> a) by means of recording the head loss or pressure difference that occurs at the ends of the conduit when a certain amount of fluid passes for a time sufficient to achieve a steady state;
> b) by means of recording the time interval necessary for a fluid to pass through a sector of conduit when subjected to a given pressure difference or head loss.

In both cases, the calculation of the rheological properties is achieved by applying the Hagen-Poiseuille law or non-stationary models, such as that described in patent WO2016178650, wherein the in-line viscosity is determined by studying the oscillating compression flow on a coaxial system that is introduced into an already pressurised pipe through which a fluid circulates.

Within the state of the art, other types of capillary devices are known that use hydrostatic pressure only to create the head loss necessary to determine the viscosity, raising the pressure above the atmosphere at one of the ends of the capillary, keeping the other open, such as those described in patents US20020139175 and CN 107036936; or determining the differential pressure at the ends of the capillary as proposed by patents US2008012771 and US13884099. All these devices are structurally built to only be able to withstand low pressures in flexible, plastic and glass conduit types.

There are also other devices that, in addition to using pressure to determine viscosity, pressurise the entire system before creating the head loss or driving force necessary for the measurement, in order to determine the viscosity under high-pressure conditions. Thus, patents US4750359 and US4916678 describe a capillary device for measuring the viscosity of liquids and gases under pressure, creating pressure in the system by evaporating a portion of the sample, recording the time it takes for a portion of liquid to flow through a capillary and finally applying mathematical equations to obtain the result.

In other cases, such as that described in patent US4578990, the flow and head loss are detected by pumping the liquid through several capillaries and waiting to reach the steady state of the system. When the design of the device and/or the operating conditions require a long time to reach the steady state, solutions have been proposed, such as the one disclosed in patent US4890482, which are based on transient flow. The method consists of pressurising the fluid by means of gas bottles, it is made to flow by opening a valve and the viscosity is determined by measuring the variation of the differential pressure, as a function of time, at the ends of a capillary before reaching the steady state, by means of the application of the transient flow equations.

Capillary flow-based devices are also known that use pumping systems to pressurise the assembly and create fluid movement through the capillary. These devices require a very long time to reach the steady state and accurately quantify the movement of fluid in the conduit, as well as drawbacks arising from the need to thermally condition large amounts of sample. Thus, patent CN201420820887 describes a high-pressure and high temperature capillary viscometer made up of two capillaries, a pressure regulation valve and a scale to determine the amount of sample that flows through the capillary. Patent US9513272 describes a system made up of a capillary rheometer adapted for measuring properties in drilling fluids operated by a pump.

Accuracy in the determination of rheological properties such as viscosity by means of capillary devices requires the accurate determination of two variables:

- the mass flow that circulates through the capillary and
- the pressure difference or head loss at the ends thereof.

One of these variables is considered fixed and the other is experimentally determined. Compared to any of the technologies and devices known in the state of the art, the present invention provides the non-obvious solution of using two independent devices, one conventional for pressurising the sample (simple piston pump) and the other special dedicated to achieving a stable and perfectly quantified flow (opposed piston pump).

Furthermore, the present invention provides the advantage of requiring only a small amount of study fluid, with the advantages of the easy thermal conditioning thereof, by confining it in a zone independent from the pressurisation zone, by incorporating two high-pressure cylinders, provided with respective internal low-friction pistons, which separate the study fluid from the pressurisation fluid.

Taking into account the existing background in the state of the art, and the aforementioned technical problems, the present invention discloses a solution that provides the advantages of obtaining the measurement of the rheological properties of a fluid so that, on the one hand, it only requires a small amount of sample and, on the other hand, it extends the temperature ceiling of existing capillary devices described in the state of the art, without compromising the integrity of the seals of the pumping system of the fluid under study, by using an independent pump with opposed pistons, thus guaranteeing the accurate value of the flow that circulates through the capillary.

## Description of the invention

The present invention describes equipment for studying the capillary flow and determining the rheological properties of all types of fluids such as any type of dispersions, organic and inorganic fluids, in the pressure range comprised between 0-4000 bar and the temperature range from -180 °C to 800 °C.

This invention enables the mass flow of the study fluid to be determined by means of an opposed piston pump, which is pressurised by means of another simple piston pump up to a pressure P1, pressure that is transmitted from the pressurisation fluid to the study fluid by means of a cylinder system provided with intermediate pistons.

Once the study fluid is pressurised, the opposed piston pump drives a fixed volume of fluid in one direction and, at the same time, sucks the same volume in the other one, without the need for the intervention of a flow control system since they are opposed pistons, keeping exactly the material continuity of the system and calculating the head loss by means of the difference between the positive drive pressure (P2) and the negative suction pressure (P3) or vice versa.

It should be noted that, throughout the description and claims, the term "comprises" and the variants thereof are not intended to exclude other technical features or additional elements. In addition, the present equipment enables the rheological data of any type of fluid to be obtained, not being limited to those initially exposed.

Additionally, in order to complete the description and to help a better understanding of the features of the invention, a set of figures and drawings is presented in which the following is represented by way of illustration and not limitation:

Figure 1. Diagram of the capillary rheometry measurement equipment object of the present invention.

Figure 2. Diagram representing the head loss for various reciprocating velocities at pressure P1 of 3000 bar.

## Detailed description of the invention

The equipment for measuring the rheological properties of a fluid that is described in the present invention, unlike any equipment known in the state of the art, comprises the components that are detailed below.

A pipe or capillary (1) with an internal circular cross section comprised, but not limited, between 0.25 and 10 mm in diameter and with an external cross section to withstand the pressure of 5000 bar, and a length comprised, but not limited, between 10 and 50000 mm.

The capillary is hydraulically connected by means of conduits (2) to a system of high-pressure cylinders (3a and 3b), provided with internal low friction and temperature resistant pistons (30a and 30b) that separate a pressurisation fluid (PF) (which can be for example water or oil) from the study fluid to be accurately analysed (AF).

The equipment has a capillary loading and purging system (1) made up of an auxiliary load syringe pump (4), which is connected by means of the conduits (2) of the high-pressure and high temperature hydraulic system, to a system of pressure and temperature transducers (5), and these in turn to a data acquisition system, by means of an analogue/digital converter and to a computer (6) or similar electronic equipment.

The syringe pump (4) is a loading pump that is preferably made up of a syringe with manual and/or automatic control and a connection element to the conduits (2) of the hydraulic system that feeds and purges the high-pressure cylinders (3a and 3b) of the fluid to be analysed.

The capillary assembly (1), the hydraulic system made up of conduits (2) that feed the fluid to be analysed (AF) to the high-pressure cylinders (3a and 3b), and said cylinders (3a and 3b) are protected within a thermostatic chamber (7). This chamber is a tempering system capable of maintaining a constant temperature, or a controlled temperature ramp, in the preferred but not limited range from -180 °C to 800 °C. This chamber enables the thermal stability of the capillary assembly (1), the hydraulic connection system made up of the conduits (2) and the high-pressure cylinders (3a-3b), as they are all enclosed in the thermostatic chamber (7).

The previous elements are intended to define the feed of the fluid to be analysed (AF) inside the capillary and cylinders. Similarly, for the equipment to carry out the measurements, the cylinders must be additionally fed with a pressurisation fluid (PF). For this, the equipment comprises a flow control system made up of at least one automatic piston pump (8), which is/are located externally to the chamber (7) and in a position opposite to the previously described elements. These pumps have the particular feature of having identical opposed pistons and chambers, and this flow control system, which can be pressurised between 0 and 4000 bar, drives a constant and controlled flow of pressurisation fluid (PF) to the high-pressure cylinders (3a and 3b) at one end and at the same time it sucks the same amount of fluid, so that it drives and sucks the same amount of liquid into the closed circuit (3a - 1 - 3b). The delivered flow is stable from the minimum value of 0.007 ml/min to the maximum value of 100 ml/min, at any pressure P1 in the range 0-4000 bar.

The actuator of the opposed piston pump (8) has a plurality of analogue outputs for mass flow velocity, pump position/volume and system pressure, as well as a safety element by means of rupture disc (80), all of them controlled in turn by the computer (6). The pumping system can be charged/purged through regulation valves (81a-81b) with a pressurisation fluid that, as previously mentioned, can be the same or different from the sample liquid.

The pressurisation system is completed with a manual or automatic single piston pressurisation pump (9), which is loaded with the fluid contained in a tank (10), and which pressurises the piston pump (8) to a P1 between 0 and 4000 bar, which in turn loads the closed capillary system or circuit (3a-1-3b) so that measurements can be carried out.

Once the loading system of both the fluid to be analysed (AF) and the pressurisation fluid (PF) has been defined, in order to obtain the rheological results, as previously advanced, the equipment comprises transducers (5), which is a signal acquisition and control system comprising at least three pressure transducers (5p1, 5p2 and 5p3) and a temperature one (5T), one or more analogue-digital converters, analogue and digital inputs and outputs and an electronic programmable module, in connection with the computer (6), which records the pump signals (back-and-forth velocity, position of the opposed pistons and pressure) and calculates the head loss over the set pressure measured in one of the transducers (5p1), as the difference between the reading of the other pressure transducers (5p2 and 5p3), finally calculating the viscosity and/or threshold stress.

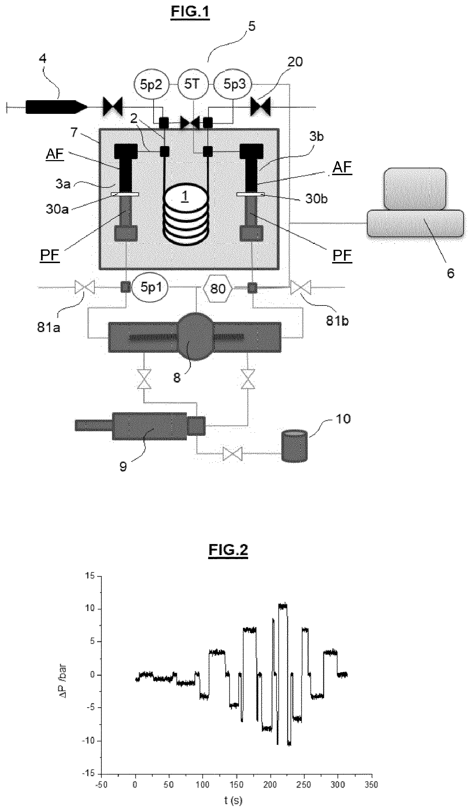

An example of the measurement process of a preferred embodiment of the invention, as can be seen from the diagram represented in Figure 1, is that the equipment is loaded with the study fluid by means of the syringe pump (4), flooding the capillary (1) and purging through a regulation valve (20). More study liquid is pumped through the syringe pump (4) and the equipment is purged through the valves (81a and 81b), thereby loading the high-pressure cylinders (3a and 3b) to the desired and previously set position of the internal piston, which is controlled by the computer (6). Moreover, the pressurisation pump (9) is loaded by sucking the external tank (10) wherein a pressurisation fluid is stored, which is pumped to the opposed piston pump (8) and to the high-pressure cylinders (3a and 3b), purging, if necessary, through the regulation valves. Once this assembly of valves is closed, the set pressure is reached in the high-pressure cylinders (3a and 3b) and in the closed circuit (3a - 1 -3b) by means of the control of the pressurisation pump (6), and the results of the gauges (5P1, 5p2 and 5p3) are obtained. The measurement is achieved by commanding a back-and-forth velocity in the piston pump (8), which forces the movement of the fluid, driving from the cylinder (3a) and sucking from the cylinder (3b) or vice versa, passing the fluid through the capillary (1) and creating a pressure difference at the ends thereof that is detected in the reading difference of (5p2) and (5p3) or vice versa, which is recorded by the computer (6) and is shown in Figure 2, the rheological parameters being calculated using the Hagen-Poiseuille law (formula F1)

$$Q = \frac{\Delta p \pi R^4}{8L\eta}$$

(F1)

wherein *Q* is the flow rate that passes through the capillary; *Δp* is the pressure difference detected in the gauges; *r* is the radius of the capillary; *L* the length of the capillary; and *η* the starting value of the viscosity or rheological data that is sought with the present invention. With this starting value, the rest of the rheological values of the fluid can be calculated. To do this, Figure 2 shows the head loss values recorded in the computer (6) for various back-and-forth velocities programmed into the device, at pressure P1 of 3000 bar. The viscosity is calculated from the recorded values and the geometric features of the capillary (r and L). Table 1 shows a detailed example of the calculation of the viscosity of a lubricating oil, subjected to a pressure of 3000bar, from the flow values Q, programmed into the device, the head loss readings in Figure 2 and the geometric constants of the capillary, 3000 mm of length L and 0.5 mm of internal radius r, by applying the formula (F1).

*Table 1*

| Flow Q (ml/min) | Head loss ΔP (bar) | Viscosity η (Pa-s) |
|---|---|---|
| 1 | 0.66 | 0.0324 |
| 2 | 1.35 | 0.0331 |
| 5 | 3.35 | 0.0329 |
| 7 | 4.75 | 0.0333 |
| 10 | 6.86 | 0.0337 |
| 12 | 8.23 | 0.0337 |
| 15 | 10.2 | 0.0334 |
| 10 | 6.8 | 0.0334 |
| 5 | 3.38 | 0.0332 |

Table 1. Example of the calculation of the viscosity of a lubricating oil at 25 °C and 3000bar pressure.

Therefore, the equipment described in the present invention enables the properties of all types of fluids to be studied by controlling the capillary flow in the pipe by separating the study fluid from the pressurisation fluid by means of a system of high-pressure and low friction cylinders, controlling the movement of the study fluid in the capillary; which, compared to other known equipment, has the particular feature that the load and purge is independent between the pressurisation circuit (and fluid) and the study circuit (and fluid); and that all this is automatically controlled by means of a computer that centralises and manages all the regulation actions and receives the data for calculating and obtaining the rheological values.

**Claims**

1. An equipment for measuring the rheological properties in fluids, wherein the fluid to be analysed (AF) is passed through a capillary (1) with a circular cross section; and **characterised in that** it comprises:

    - a syringe pump (4) that loads the equipment with the fluid to be analysed (AF), which is connected through hydraulic conduits (2) to high-pressure cylinders (3a and 3b), provided with internal low friction pistons (30a and 30b) that separate said fluid to be analysed (AF) from a pressurisation fluid (PF), and wherein the cylinders (3a and 3b) are in connection with the capillary (1) passing the fluid to be analysed through said capillary, therefore having a closed hydraulic circuit (3a-1-3b) of fluid to be analysed (AF); and wherein this closed circuit is in connection with a transducer system (5) with a plurality of pressure and temperature transducers with which data and pressure difference readings are acquired, and all this in connection with a computer (6);
    - a thermostatic chamber (7) that thermally protects the closed fluid circuit to be analysed formed by the capillary (1), the high-pressure cylinders (3a and 3b) and the hydraulic connections thereof;
    - an automatic piston pump (8) external to the thermostatic chamber (7) that loads the high-pressure cylinders (3a and 3b) with a pressurisation fluid (PF), which has a plurality of analogue outputs of mass flow velocity, position/volume of the pump and system pressure, as well as a safety element by means of a rupture disc (80), all of them controlled in turn by the computer (6) and also in connection with the transducer system (5); wherein the piston pump (8) is in hydraulic connection with a pressurisation pump (9) that is loaded and feeds the piston pump (8) with pressurisation fluid by means of sucking said pressurisation fluid (PF) from an external tank (10); and

wherein once the pressure difference at the ends of the closed circuit (3a-1-3b) of the fluid to be analysed (AF) has been detected by the differences in the transducers, the computer (6) calculates the rheological parameters using the Hagen-Poiseuille law.

2. The equipment for measuring the rheological properties in fluids, according to claim 1, **characterised in that** the transducer system (5) comprises at least three pressure transducers (5p1, 5p2 and 5p3) and a temperature one (5T), at least one analogue-digital converter, analogue and digital inputs and outputs, and a programmable electronic module.

3. The equipment for measuring the rheological properties in fluids, according to claim 1, **characterised in that** the flow rate of fluid to be analysed supplied from the syringe pump (4) is stable from the minimum value of 0.007 ml/min to the maximum value of 100 ml/min, and at any pressure in the range 0-4000 bar.

4. The equipment for measuring the rheological properties in fluids, according to claim 1, **characterised in that** the capillary (1) has an internal circular cross section comprised between 0.25 and 10 mm in diameter, and a length between 10 and 50,000 mm.

5. The equipment for measuring the rheological properties in fluids, according to claim 1, **characterised in that** the thermostatic chamber (7) maintains the closed hydraulic circuit (3a-1-3b) of fluid to be analysed at a constant temperature that is comprised within the range from -180 °C to 800 °C.

## FIG.1

## FIG.2

## INTERNATIONAL SEARCH REPORT

| | International application No. |
| --- | --- |
| | PCT/ES2019/070653 |

**A. CLASSIFICATION OF SUBJECT MATTER**

*G01N11/08* (2006.01)

According to International Patent Classification (IPC) or to both national classification and IPC

**B. FIELDS SEARCHED**

Minimum documentation searched (classification system followed by classification symbols)
G01N

Documentation searched other than minimum documentation to the extent that such documents are included in the fields searched

Electronic data base consulted during the international search (name of data base and, where practicable, search terms used)

EPODOC, INVENES, XPAIP, XPESP, XPI3E, XPIEE, XPOACNPL, INSPEC, NPL

**C. DOCUMENTS CONSIDERED TO BE RELEVANT**

| Category* | Citation of document, with indication, where appropriate, of the relevant passages | Relevant to claim No. |
| --- | --- | --- |
| X | CN 207730608U U (CHINA HUANENG GROUP ET AL.) 14/08/2018, Abstract from DataBase WPI. Retrieved from EPOQUE [retrieved on 08-01-2020]; description; figure 1. | 1-5 |
| A | EP 0840104 A1 (BELONENKO VLADIMIR NIKOLAEVICH ET AL.) 06/05/1998, abstract; column 5, line 3 - column 7, line 46; figure 1. | 1-5 |
| A | CN 202041437U U (CHINA PETROLEUM & CHEMICAL ET AL.) 16/11/2011, Abstract from DataBase WPI. Retrieved from EPOQUE [retrieved on 08-01-2020]; description; figure 1. | 1-5 |

☒ Further documents are listed in the continuation of Box C.  ☒ See patent family annex.

| * Special categories of cited documents: | "T" | later document published after the international filing date or priority date and not in conflict with the application but cited to understand the principle or theory underlying the invention |
| --- | --- | --- |
| "A" document defining the general state of the art which is not considered to be of particular relevance. | | |
| "E" earlier document but published on or after the international filing date | | |
| "L" document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" document published prior to the international filing date but later than the priority date claimed | "&" | document member of the same patent family |

| Date of the actual completion of the international search | Date of mailing of the international search report |
| --- | --- |
| 08/01/2020 | **(10/01/2020)** |
| Name and mailing address of the ISA/ | Authorized officer |
| OFICINA ESPAÑOLA DE PATENTES Y MARCAS Paseo de la Castellana, 75 - 28071 Madrid (España) Facsimile No.: 91 349 53 04 | E. Pina Martínez |
| | Telephone No. 91 3498552 |

Form PCT/ISA/210 (second sheet) (January 2015)

EP 3 862 741 A1

## INTERNATIONAL SEARCH REPORT

International application No.

PCT/ES2019/070653

C (continuation). DOCUMENTS CONSIDERED TO BE RELEVANT

| Category * | Citation of documents, with indication, where appropriate, of the relevant passages | Relevant to claim No. |
|---|---|---|
| A | DE 4218190 A1 (HAAKE MEDINGEN GMBH) 09/12/1993, Abstract from DataBase WPI. Retrieved from EPOQUE [retrieved on 21-10-2019], description; figure 2. | 1-5 |

Form PCT/ISA/210 (continuation of second sheet) (January 2015)

## INTERNATIONAL SEARCH REPORT

Information on patent family members

International application No.

PCT/ES2019/070653

| Patent document cited in the search report | Publication date | Patent family member(s) | Publication date |
|---|---|---|---|
| CN207730608U U | 14.08.2018 | NONE | |
| EP0840104 A1 | 06.05.1998 | RU95100575 A<br>RU2129265 C1<br>RU95100572 A<br>RU2119154 C1<br>WO9621854 A1<br>AU4460596 A | 10.01.1997<br>20.04.1999<br>27.10.1996<br>20.09.1998<br>18.07.1996<br>31.07.1996 |
| CN202041437U U | 16.11.2011 | NONE | |
| DE4218190 A1 | 09.12.1993 | NONE | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016178650 A
- US 20020139175 A
- CN 107036936
- US 2008012771 A
- US 13884099 B
- US 4750359 A
- US 4916678 A
- US 4578990 A
- US 4890482 A
- CN 201420820887
- US 9513272 B